# EUROPÄISCHE PATENTSCHRIFT

(11) **EP 1 368 177 B1**
(45) Veröffentlichungstag und Bekanntmachung des Hinweises auf die Patenterteilung: **04.11.2009**
(21) Anmeldenummer: 02722109.2
(22) Anmeldetag: 22.02.2002
(51) Int. Cl.: B29C 47/20, B29C 47/88, B29C 47/92, B29C 47/86

(54) **FOLIENBLASKOPF UND VERFAHREN ZUR HERSTELLUNG VON SCHLAUCHFOLIEN**
BLOWN FILM DIE AND PROCESS FOR PRODUCING TUBULAR FILM
TETE DE SOUFFLAGE DE FEUILLES ET PROCEDE DESTINES A LA FABRICATION DE FEUILLES EN GAINES

(30) Priorität: 05.03.2001 DE 10110479; 11.05.2001 DE 10122856
(43) Veröffentlichungstag der Anmeldung: 10.12.2003
(73) Patentinhaber: Windmöller & Hölscher KG, 49525 Lengerich (DE)
(72) Erfinder: FISCHER, Herbert, 48431 Rheine (DE)
(86) Internationale Anmeldenummer: PCT/EP2002/001798
(87) Internationale Veröffentlichungsnummer: WO 2002/070230

(56) Entgegenhaltungen:
- EP-A- 0 425 797
- DE-A- 2 658 518
- DE-A- 3 920 194
- DE-A- 4 207 439

## Beschreibung

Die Erfindung betrifft einen Folienblaskopf und ein Verfahren zur Herstellung von Schlauchfolien aus thermoplastischem Kunststoff.

Folienblasköpfe dieser Art sind in unterschiedlichen Ausführungsformen bekannt, wobei die in axialer Richtung durch den Folienblaskopf zugeführte und abgezogene Innenkühlluft der Kühlung des extrudierten Folienschlauches und dem Aufblasen des Folienschlauches zu einer den schmelzflüssigen Kunststoffschlauch ausreckenden Schlauchfolienblase dient. Es gibt jedoch auch Folienblasköpfe, bei denen während der Extrusion keine Luft in die Folienblase zu und/oder abgeführt wird, sondern ein vorgegebenes statisches Luftvolumen in der Folienblase vorhanden ist.

Außenkühlringe weisen in der Regel einen auf den extrudierten Folienschlauch gerichteten ringförmigen Düsenspalt auf, durch den dieser mit Kühlluft angeblasen wird, so daß dieser zur Erhöhung der Ausstoßleistung schnell mit möglichst tiefliegender sogenannter Frostlinie abgekühlt wird.

Um die Dicke des zu einer Schlauchfolienblase aufgeblasenen Folienschlauches über dessen Umfang regeln zu können, ist es bekannt, die schlauchförmige extrudierte Kunststoffschmelze über ihren Umfang abschnittsweise unterschiedlich zu erwärmen und/oder zu kühlen, um das Dickenprofil zu beeinflussen. Hierbei wird die Wirkung ausgenutzt, daß beim Aufblasen des Kunststoffschlauches zu einer Schlauchblase die wärmeren Bereiche stärker und die kühleren Bereiche weniger stark ausgereckt werden.

Zu diesem Zweck werden physikalische Parameter der Kühlluft sektorenweise variiert. Zu diesen Parametern zählt die Temperatur und der Volumenstrom der Kühlluft.

Die DE 4207439 A1 offenbart drei Ausführungsbeispiele zur Blasfolienherstellung. Die ersten beiden Ausführungsbeispiele zeigen eine Blasfolienanlage, die jeweils einen Außenkühlring umfasst, der in Sektoren unterteilt ist, in denen die auf den extrudierten Folienschlauch geblasene Luft unterschiedlich erwärmbar und/oder kühlbar ist. Diese Folienblasköpfe weisen eine kompakte Bauweise auf, weil die Elemente zur unterschiedlichen Erwärmung bzw. Kühlung der auf den extrudierten Folienschlauch geblasenen Luft unmittelbar in den Außenkühlring integriert sind. Zur Erwärmung können hier auf Umfang verteilte Heizpatronen und zur Kühlung auf Umfang verteilte Peltierelemente verteilt angeordnet seien. Das dritte Ausführungsbeispiel der DE 4207439 A1 zeigt einen Blaskopf. Die äußere Düsenlippe des Düsenspaltes zeigt Bohrungen durch die unterschiedlich erwärmte oder gekühlte Luft auf die Blasfolie zuführbar ist. Im Rahmen des dritten Ausführungsbeispiels wird ein sektorweise unterteilter Außenkühlring nicht offenbart.

Die EP 0 425 797 A1 zeigt eine Ringdüse für Strangpressen, vorzugsweise einen Blaskopf zur Herstellung von Schlauchfolien, bestehend aus einem Innenring oder aus einem inneren Kern und einem Außenring, zwischen denen der ringförmige Düsenspalt gebildet ist. Um Abschnitte einer derartigen Ringdüse in einfacher Weise erwärmen und gegebenenfalls auch abkühlen zu können, ist der Innen- und/oder Außenkühlring der Ringdüse in mehrere Temperiersektoren unterteilt, die mit Bohrungen oder Aussparungen versehen sind, in die elektrische Heizpatronen eingesetzt sind.
Die EP 0 425 797 A1 schlägt vor, zu dem Zweck der sektorweisen Erwärmung des Außenkühlrings oder Innenkühlrings den Außenkühlring und/oder den Innenkühlring mit Heizpatronen zu versehen.

Die DE 26 58 518 A1 schlägt die Variation eines anderen physikalischen Parameters der Kühlluft, nämlich des Volumenstroms pro Zeiteinheit, vor.

Die DE 39 20 194 A1 führt den Gedanken der Variation des Volumenstromes fort, indem sie zwei Kühlluftströmungen vorschlägt:

Einen ersten Hauptkühlluftstrom, der eine Grundkühlung der gerade extrudierten Folie sicherstellt.

Einen zweiten feinfühlig regelbaren Kühlluftstrom, aus dem Luft entnommen wird, die selektiv in einzelne Sektoren zusätzlich zu dem Hauptkühlluftstrom gegen die Folienwandung geblasen wird und hierbei die Kühlwirkung selektiv erhöht. Alternativ wird vorgeschlagen, Luft aus der ersten Kühlluftströmung, die für einzelne Sektoren bestimmt ist, selektiv mit der zweiten Kühlluftströmung abzusaugen, um hierdurch die Kühlwirkung selektiv sektorweise zu verringern.

Die sektorenweise Variation der physikalischen Parameter der Kühlluft kann auch zusätzlich oder alternativ am oder durch den Innenkühlring erfolgen.

Aus der DE 42 36 443 A sind andererseits Folienblasköpfe bekannt geworden, bei denen im Folienblaskopf selbst auf Umfang verteilte Heizpatronen integriert sind, wobei diese Heizpatronen zur Regelung der Dicke des Folienschlauches jeweils ansteuerbar sind. Aus diesem Aufbau des Blaskopfes resultiert eine abschnittweise Veränderbarkeit der Temperatur des Blaskopfes. Dieses System weist allerdings gegenüber dem System mit dem Außenkühlring den Nachteil einer trägeren Regelung auf.

Auch wenn der aus DE 42 07 439 A bekannte Folienblaskopf eine schnelle und genaue Regelung der auf den aus dem Folienblaskopf austretenden Folienschlauch aufgeblasenen Kühlluft ermöglicht, ergeben sich trotzdem Ungenauigkeiten bei der Regelung der Wanddicke des Folienblasschlauches dadurch, dass im Bereich des Düsenaustritts des Außenkühlrings Wechselwirkungen zwischen der temperierten aus dem Außenkühlring strömenden Luft und der Umgebungsluft stattfinden. Hier entstehen in Abhängigkeit von den gegebenenfalls wechselnden Umgebungsbedingungen instationäre Turbulenzen, die das Kühlergebnis im Bereich des Folienschlauches in unvorhersehbarer Weise beeinträchtigen.

Aufgabe der vorliegenden Erfindung ist es daher, einen gattungsgemäßen Folienblaskopf derart weiterzubilden, dass die Regelung der Wanddicke des Folienblasschlauches zuverlässiger durchführbar ist.

Zur Lösung dieser Aufgabe geht die vorliegende Erfindung von den vorgenannten Folienblasköpfen aus, bei denen physikalische Parameter der von Kühlringen gegen den Kunststoffschlauch geblasenen Luft zur Regelung der Foliendicke variiert werden.

Gelöst wird die erfindungsgemäße Aufgabe durch die Merkmale der Ansprüche 1,2, 10 und 11.

Vorteilhafte Ausgestaltungen der Erfindung sind Gegenstand der abhängigen Ansprüche.

In den meisten Fällen weist der Folienblaskopf zur Herstellung von Schlauchfolien aus thermoplastischem Kunststoff mindestens einen Zuführungskanal für die Kunststoffschmelze, der in einer ringförmigen Austrittsdüse mündet, auf, weiterhin Leitungen zum Zu- und Abführen von Innenkühlluft und einen den extrudierten Kunststoffschlauch einfassenden Außenkühlring, der in Sektoren unterteilt ist, in denen die auf den extrudierten Folienschlauch geblasene Luft unterschiedlich erwärmbar und/oder kühlbar ist.

Es ist jedoch auch denkbar, überhaupt keine Leitungen für die Zu- oder Abführung von Innenkühlluft vorzusehen, so dass die Folienblase ohne Luftzufuhr in einem sogenannten statischen Zustand verbleibt.

Erfindungsgemäß ist die Temperatur des Folienblaskopfes abschnittweise veränderbar. In der Regel wird diese Veränderbarkeit durch Heizpatronen in dem Blaskopf herbeigeführt, welche zusätzlich über den Umfang desselben verteilt sind.

Mit diesen Heizpatronen kann die Temperatur des Blaskopfes abschnittweise verändert werden, wobei ein Abschnitt jeweils einen Winkelbereich in Umfangsrichtung des Blaskopfes umfasst.

Die abschnittweise Veränderbarkeit der Biaskopftemperatur kann man jedoch auch erreichen, indem man Luftleitungen durch den Blaskopf führt. Diese Luftleitungen können so beschaffen sein, dass die Luftabfuhr und - zufuhrleitungen am Umfang des Blaskopfes enden, so dass die Folienblase selbst von diesen Luftströmen nicht beeinflusst wird. Bei der Verwendung solcher Leitungen erfolgt die Veränderung der Blaskopftemperatur, indem die physikalischen Parameter der Luft, die durch diese Leitungen strömt, verändert werden. Zu diesen Parametern zählen vor allem die Temperatur und das Volumen der Luft pro Zeiteinheit. In der Regel wird man pro Abschnitt eine Luftleitung vorsehen, um die Temperatur des Blaskopfes abschnittweise zu variieren. Natürlich sind auch noch andere Möglichkeiten denkbar, die Blaskopftemperatur zu beeinflussen. Wichtig für die Zwecke dieser Erfindung ist es jedoch, dass diese Veränderung abschnittweise erfolgen kann. Darüber hinaus ist es nicht nötig, die Einwirkung der genannten Maßnahmen der Temperaturbeeinflussung auf den Bereich des Blaskopfes, der in radialer Richtung außerhalb des Folienschlauchs beziehungsweise des Düsenringes liegt, zu begrenzen. Die abschnittweise durchgeführte Veränderung der Blaskopftemperatur kann auch in Sektoren innerhalb des Düsenringes oder von Sektoren inner- und außerhalb des Düsenringes vorgenommen werden. Zusätzlich oder alternativ dazu können im Folienblaskopf zusätzliche Bohrungen auf Umfang angeordnet sein, die im Wesentlichen senkrecht zu dem Außenkühlring ausgerichtet sind, wobei aus diesen unterschiedlich temperierbare Luft ausblasbar ist. Nach der Erfindung können jeweils eine erste Steuereinheit für die Heizstäbe und/oder Kühlelemente im Außenkühlring und eine zweite Steuereinheit für die Heizpatronen bzw. für die Steuerung des Volumenstroms bzw. der Temperatur der aus den zusätzlichen Bohrungen im Folienblaskopf ausblasbaren Luft vorgesehen sein.

Gemäß einer vorteilhaften Ausgestaltung der Erfindung sind im Außenkühlring Heizstäbe und/oder Kühlelemente auf Umfang angeordnet.

Die Steuereinheiten können in Abhängigkeit von dem Signal einer Dickenmesseinrichtung für die Wanddicke der Folienblase steuerbar sein.

Vorzugsweise wird eine abhängige Regelung derart durchgeführt, dass zunächst die Heizstäbe und/oder Kühlelemente des Außenkühlrings und nachgeordnet die trägeren Heizpatronen innerhalb des Folienblaskopfes angesteuert werden.

Überraschend ergibt sich, dass die Überlagerung der Kühlung der Folienblase über den Außenring mittels der im Folienblaskopf selbst eingelassenen trägeren Heizpatronen eine exaktere Regelung auf die Wandungsdicke der Folienblase ermöglicht.

Weitere Einzelheiten und Vorteile der Erfindung werden anhand der in den Zeichnungen dargestellten Ausführungsbeispielen näher erläutert. Die Figuren zeigen:

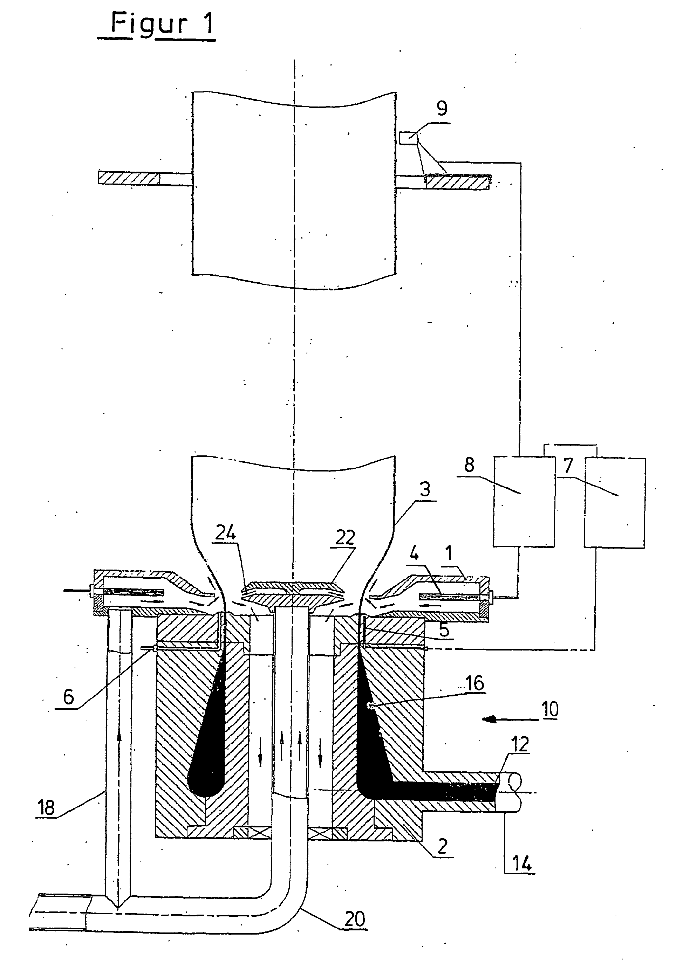

- Figur 1:: Ein Ausführungsbeispiel eines erfindungsgemäßen Folienblaskopfes, welcher in einem vertikalen Schnitt dargestellt ist.
- Figur 2:: Eine Skizze der Lage der Sektoren eines Außenkühlrings und der Lage der Heizpatronen, welch am Umfang eines Blaskopfes angeordnet sind.

Dem Folienblaskopf 10 wird die Kunststoffschmelze 12 von einer schematisch angeordneten Strangpresse über ein Anschlußstück 14 zugeführt. Die Kunststoffschmelze wird dann zu ihrer Verteilung einem Ringverteilerkanal 16 zugeleitet, der dann in die ringförmige Austrittsdüse mündet. Der geschnitten dargestellte Folienschlauch 3 tritt dann aus dem ringförmigen Düsenspalt aus, der durch zwei Mundstückringe gebildet ist. Auf dem äußeren Mundstückring liegt ein Kühlring 1, der durch einen Ringspalt Kühlluft auf die extrudierte Schlauchfolie 3 direkt oberhalb des Mundstückringes leitet.

Die zugeführte Kühlluft wird von einem nicht dargestellten Gebläse für Innen- und Außenkühlung gemeinsam gefördert und über ein Verbindungsrohr 18 dem Außenkühlring 1 bzw. über ein Rohr 20 einem Innenkühlring 22 zugeleitet, dessen Austrittsspalt 24 vorzugsweise abwärts geneigt oder auch einfach radial nach außen blasend angeordnet ist, so daß der scharf gebündelte Luftstrahl die Innenseite des Folienschlauches etwa in der gleichen Höhe wie der des Außenluftstrahls trifft. Der grundsätzliche Aufbau des aus der Figur ersichtlichen Folienblaskopfes ist aus der DE 1 96 09 62 A bzw. der DE 42 07 439 A bekannt, auf die der Einfachheit halber zur weiteren Beschreibung verwiesen wird.

Bei dem erfindungsgemäßen Folienblaskopf sind in dem Außenkühlring 1 Heizstäbe 4 gleichmäßig über den Umfang verteilt angeordnet, die radial von außen nach innen ragen. Die Heizstäbe 4 sind, wie in der Figur ersichtlich, in der ringförmigen äußeren Wandung des Außenkühlringes 1 angeordnet. Die Heizstäbe 4 sind mit Heizpatronen versehen, die unabhängig voneinander ansteuerbar sind.

Neben dem Außenkühlring 1 mit den Heizstäben 4 sind im Folienblaskopf 10 im Bereich der ringförmigen Austrittsdüse gleich verteilt auf Umfang Heizpatronen 5 angeordnet, die unabhängig voneinander ansteuerbar sind.

Im oberen Bereich der Folienschlauchblase, d.h. im Bereich nach der Frostlinie ist eine Dickenmesseinrichtung 9 zur Messung der Dicke des Folienschlauches angeordnet. Die entsprechenden Meßwerte werden einer Datenverarbeitungs- und Steuereinheit 8 für die Heizstäbe 4 im Außenkühlring zugeleitet. Von dieser Datenverarbeitungs- und Steuereinheit 8 aus werden die Werte weitergeleitet an eine Datenverarbeitungs- und Steuereinheit 7 für die Heizpatronen 5 im Folienblaskopf weitergeleitet.

In der hier dargestellten Ausführung sind zusätzlich Luftrohre 6 im Folienblaskopf vorgesehen, die, wie in der Figur dargestellt, im wesentlichen senkrecht zu dem Außenkühlring ausgerichtet sind. Die Luftrohre 6 sind ebenfalls auf Umfang verteilt im Folienblaskopf 10 integriert. Durch die Luftrohre 6 kann dann in gesteuerter Weise unterschiedlich erwärmte und gekühlte Luft zugeführt werden, die in der dargestellten Weise auf den Kühlluftstrom trifft, der aus dem Düsenspalt des Außenkühlringes 1 austritt. Auch hier ist es ebenso gut möglich, beispielsweise den Volumenstrom der Luft, die durch die Luftrohre 6 geführt wird, zu variieren.

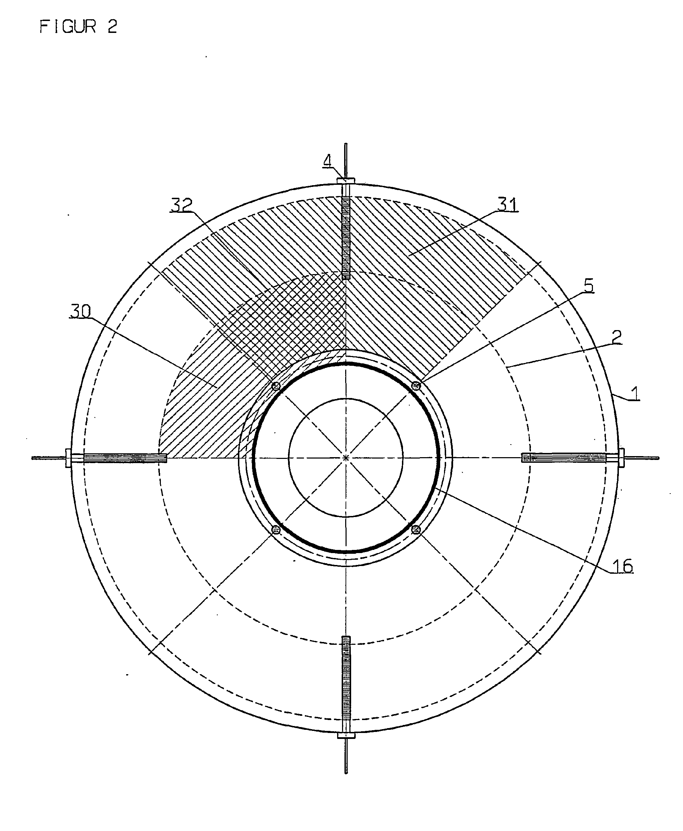

Figur 2 zeigt eine Skizze der Lage der Heizpatronen des Außenkühlringes 4 und des Blaskopfes 5 bei einem Ausführungsbeispiel der Erfindung. Hierbei werden den letzteren 5 Abschnitte 30 zugeordnet, innerhalb welcher eine Variation der Temperatur der Heizpatrone 5 die Temperatur und damit die Viskosität der Schmelze maßgeblich beeinflusst. Einer dieser Abschnitte 30 ist mit einer Schraffur dargestellt, welche schräg im 45° Winkel von links unten nach rechts oben verläuft.

Analog zu den Abschnitten 30 sind Sektoren 31 gezeigt, innerhalb welcher der extrudierte Folienschlauch in erster Linie von der Heizwirkung der zugeordneten Heizpatrone 4 beeinflusst wird. Einer dieser Sektoren 31 ist durch eine Schraffur hervorgehoben, welche im 45° Winkel von links oben nach rechts unten verläuft.

Bei erfindungsgemäßen Blasköpfen entstehen resultierende Sektoren 32 der Sektoren 31 und der Abschnitte des Blaskopfes 30. In dem gezeigten Ausführungsbeispiel ist der Blaskopf zu dem Außenkühlring 1 in Umfangsrichtung so angeordnet, dass die resultierenden Sektoren einen kleineren Winkel überstreichen als die Abschnitte 30 und die Sektoren 31 jeweils einzeln.

Ein resultierender Sektor 32 ist in Figur 2 durch die Überlappung der beiden obengenanten Schraffuren hervorgehoben.

Eine solche Anordnung ermöglicht eine höhere Auflösung bei der Regelung der Viskosität der Folie.

| **Bezugszeichenliste** | |
|---|---|
| 1 | Kühlring |
| 2 | |
| 3 | Folienschlauch |
| 4 | Heizstäbe |
| 5 | Heizpatronen |
| 6 | Luftrohre |
| 7 | |
| 8 | Steuereinheit |
| 9 | Dickenmesseinrichtung |
| 10 | Folienblaskopf |
| 11 | |
| 12 | Kunststoffschmelze |
| 13 | |
| 14 | Anschlussstück |
| 15 | |
| 16 | Ringverteilerkanal |
| 17 | |
| 18 | Verbindungsrohr |
| 19 | |
| 20 | Rohr |
| 21 | |
| 22 | Innenkühlring |
| 23 | |
| 24 | |
| 25 | |
| 30 | Abschnitte des Blaskopfs |
| 31 | Sektoren der Kühlringe |
| 32 | resultierende Sektoren |

## Patentansprüche

1. Folienblaskopf (10) zur Herstellung von Schlauchfolien (3) aus thermoplastischem Kunststoff mit mindestens einem Zuführungskanal (16) für die Kunststoffschmelze, der in einer ringförmigen Austrittsdüse mündet und mit einem dem Durchmesser des extrudierten Kunststoffschlauchs (3) angepassten Innen- und/oder Außenkühlring (1), der in Sektoren (31) unterteilt ist, in denen physikalische Parameter der auf den extrudierten Folienschlauch (3) geblasenen Luft sektorenweise veränderbar sind,
- wobei der Folienblaskopf (10) in Abschnitte (30) unterteilt ist, in welchen (30) die Temperatur jeweils mit Heizpatronen (5) veränderbar ist,
- wobei Heizstäbe (4) und/oder Kühlelemente der Sektoren (31) von zumindest einer Steuereinheit (7,8) steuerbar sind und die Heizpatronen (5) der Abschnitte steuerbar sind,
- wobei mithilfe der zumindest einen Steuereinheit (7,8) verschiedene Maßnahmen zur Beeinflussung der Foliendicke regel- oder steuerbar sind,
- wobei mit der zumindest einen Steuereinheit (7,8) die Wanddicke der Folienblase in Abhängigkeit von dem Signal einer Dickenmesseinrichtung steuerbar ist.

2. Folienblaskopf (10) zur Herstellung von Schlauchfolien (3) aus thermoplastischem Kunststoff mit mindestens einem Zuführkanal (16) für die Kunststoffschmelze, der in einer ringförmigen Austrittsdüse mündet und mit einem dem Durchmesser des extrudierten Kunststoffschlauchs (3) angepassten Innen- und/ oder Außenkühlring (1), der in Sektoren (31) unterteilt ist, in denen physikalische Parameter der auf den extrudierten Folienschlauch (3) geblasenen Luft sektorenweise veränderbar sind,
- wobei im Folienblaskopf (10) zusätzliche Bohrungen (6) am Umfang angeordnet sind, die (6) im Wesentlichen senkrecht zu dem Außenkühlring (1) ausgerichtet sind, wobei aus diesen (6) Luft ausblasbar ist, deren physikalische Parameter veränderbar sind,
- wobei Heizstäbe (4) und/oder Kühlelemente der Sektoren (31) von zumindest einer Steuereinheit (7,8) steuerbar sind und die Temperatur oder der Volumenstrom der durch die zusätzlichen Bohrungen ausblasbaren Luft steuerbar sind,
- wobei mithilfe der zumindest einen Steuereinheit (7,8) verschiedene Maßnahmen zur Beeinflussung der Foliendicke regel- oder steuerbar sind, und wobei
mit der zumindest einen Steuereinheit (7,8) die Wanddicke der Folienblase in Abhängigkeit von dem Signal einer Dickenmesseinrichtung steuerbar ist.

3. Vorrichtung nach Anspruch 1 und 2, wobei
- der Folienblaskopf (10) Heizpatronen (5) und die zusätzlichen Bohrungen (6) enthält,
- und die Temperatur der Abschnitte (30) des Blaskopfes (10) und die physikalischen Parameter der Luft, die durch die zusätzlichen Bohrungen ausblasbar ist, veränderbar sind.

4. Folienblaskopf (10) nach einem der vorstehenden Ansprüche, wobei
im Außenkühlring (1) Heizpatronen (5) und/oder Kühlelemente auf Umfang angeordnet sind.

5. Folienblaskopf (10) nach einem der Ansprüche 1 sowie 3 und 4, wobei
zur Regelung der Wandungsdicke der Folienblase (3) zunächst die Mittel (4) zum Beeinflussen der physikalischen Parameter der Luft des Kühlrings (1) und ergänzend die Mittel (5) zur Veränderung der Temperatur der Abschnitte (30) des Folienblaskopfes (10) ansteuerbar sind.

6. Folienblaskopf (10) nach einem der vorstehenden Ansprüche, wobei
zumindest die Temperatur der Luft, welche von dem Innen- und/oder Außenkühlring (1) auf den extrudierten Folienschlauch (3) geblasen wird, zu den physikalischen Parametern gehört, welche sektorenweise veränderbar sind.

7. Folienblaskopf (10) nach einem der vorstehenden Ansprüche, wobei
zumindest das Volumen der Luft, welche pro Zeiteinheit von dem Innen- und/oder Außenkühlring (1) auf den extrudierten Folienschlauch (3) geblasen wird, zu den physikalischen Parametern gehört, welche sektorenweise veränderbar sind.

8. Folienblaskopf (10) nach einem der Ansprüche 1 sowie 3 bis 7, wobei
die Abschnitte (30) des Folienblaskopfes (10), in welchen die Temperatur jeweils veränderbar ist, die Sektoren (31), in denen die physikalischen Parameter der Luft, welche von dem Innen- und/oder Außenkühlring (1) auf den extrudierten Folienschlauch geblasen wird, veränderbar ist, in Umfangsrichtung des extrudierten Folienschlauchs so zueinander angeordnet sind, dass resultierende Einwirkungsbereiche der Abschnitte (30) und Sektoren (31) entstehen, welche einen kleineren Winkel in Umfangsrichtung des Folienschlauchs überstreichen als die Abschnitte oder Sektoren.

9. Folienblaskopf (10) nach einem der vorstehenden Ansprüche, wobei
sowohl der Außenkühlring (1) als auch der Innenkühlring in Sektoren (31) unterteilt ist, innerhalb derer die physikalischen Parameter der Luft, welche von dem Innen- oder Außenkühlring (1) auf den extrudierten Folienschlauch (3) geblasen wird, sektorenweise veränderbar ist, und dass die Sektoren (31) des einen Ringes (1) zu den Sektoren des anderen Ringes in Umfangsrichtung des extrudierten Folienschlauchs (3) so zueinander angeordnet sind, dass die resultierenden Einwirkungsbereiche (32) der Sektoren beider Ringe kleinere Winkel in Umfangsrichtung des Folienschlauchs überstreichen als die Sektoren (31) beider Ringe (1) jeweils alleine.

10. Verfahren zur Herstellung von Schlauchfolien (3) aus thermoplastischem Kunststoff mit einem Folienblaskopf (10) mit mindestens einem Zuführungskanal für die Kunststoffschmelze, der in einer ringförmigen Austrittsdüse mündet und mit einem dem Durchmesser des extrudierten Kunststoffschlauchs (3) angepassten Innen- und oder Außenkühlring (1), der in Sektoren (30) unterteilt ist, in denen physikalische Parameter der auf den extrudierten Folienschlauch (3) geblasenen Luft sektorenweise verändert werden,
- wobei der Folienblaskopf in Abschnitte (31) unterteilt ist, in welchen die Temperatur jeweils verändert wird,
- und zumindest eine Steuereinheit (7,8) die verschiedenen Maßnahmen zur Beeinflussung der Foliendicke regelt oder steuert und
- wobei die zumindest eine Steuereinheit (7,8) die Wanddicke der Folienblase in Abhängigkeit von dem Signal einer Dickenmesseinrichtung (9) steuert.

11. Verfahren zur Herstellung von Schlauchfolien (3) aus thermoplastischem Kunststoff mit einem Folienblaskopf (10) mit mindestens einem Zuführungskanal für die Kunststoffschmelze, der in einer ringförmigen Austrittsdüse mündet und mit einem dem Durchmesser des extrudierten Kunststoffschlauchs (3) angepassten Innen- und oder Außenkühlring (1), der in Sektoren (30) unterteilt ist, in denen physikalische Parameter der auf den extrudierten Folienschlauch (3) geblasenen Luft sektorenweise verändert werden,
- wobei im Folienblaskopf (10) zusätzliche Bohrungen am Umfang angeordnet sind, die im Wesentlichen senkrecht zu dem Außenkühlring (1) ausgerichtet sind, wobei aus diesen Luft ausgeblasen wird, deren physikalische Parameter verändert werden
- und zumindest eine Steuereinheit (7,8), welche (7,8) die verschiedenen Maßnahmen zur Beeinflussung der Foliendicke regelt oder steuert und
- wobei die zumindest eine Steuereinheit (7,8) die Wanddicke der Folienblase in Abhängigkeit von dem Signal einer Dickenmesseinrichtung steuert.

## Claims

1. Film die (10) for the production of tubular film (3) made of thermoplastic synthetics, the film die comprising at least one feed channel (16) for synthetic fused material, which ends in a ring-shaped discharge nozzle, and with an interior- and/or exterior cooling ring (1) adjusted to the diameter of the extruded synthetic tube (3), the extruded synthetic tube being divided into sectors (31) in which physical parameters of the air blown onto the extruded film tube (3) can be variably changed sector by sector,
- whereby the film die (10) is divided into sections (30) in which (30) temperature can be changed individually variable by heating cartridges (5),
- whereby heating rods (4) and/or cooling elements of the sectors (31) are controlled by at least one control unit (7, 8), the heating cartridges (5) of the sections being controllable,
- whereby diverse activities for the interference of the film thickness are controllable by means of at least one control unit (7, 8),
- whereby the wall thickness of the film bubble is controllable by the at least one control unit (7, 8) depending on the signal of a thickness measuring device.

2. Film die (10) for the production of tubular film (3) made of thermoplastic synthetics, the film die comprising at least one feed channel (16) for synthetic fused material, which ends in a ring-shaped discharge nozzle, and with an interior- and/or exterior cooling ring (1) adjusted to the diameter of the extruded synthetic tube (3), the extruded synthetic tube being divided into sectors (31) in which physical parameters of the air blown onto the extruded film tube (3) can be variably changed sector by sector,
- whereby in the film die (10) additional bores (6) are arranged across the circumference, which are essentially aligned vertical to the exterior cooling ring (1), whereby air of variable temperatures can be blown from them, the physical parameters of which being changeable,
- whereby heating rods (4) and/or cooling elements of the sectors (31) and the temperature or the volume stream of the air blown through the additional bores are controlled by at least one control unit (7, 8),
- whereby diverse activities for the interference of the film thickness are controllable by means of at least one control unit (7, 8),
- whereby the wall thickness of the film bubble is controllable by the at least one control unit (7, 8) depending on the signal of a thickness measuring device.

3. Equipment according to claims 1 or 2,
- whereby the film die (10) contains heating cartridges (5) and the additional bores (6),
- and the temperature of the sections (30) of the film die (10) and the physical parameters of the air which is blown through the additional bores being changeable.

4. Film die (10) according to one of the preceding claims,
whereby heating cartridges (5) and/or cooling elements are arranged in the exterior cooling ring (1) across the circumference.

5. Film die (10) according to on of the claims 1 as well as 3 and 4,
whereby the wall thickness of the film bubble (3) is controlled by influencing of physical parameters of air of the cooling ring (1) and supplemental to that means (5) for changing the temperature of the sections (30) of the film die (10) are activated.

6. Film die (10) according to one of the preceding claims,
whereby at least the air temperature, which is blown from at least one of the interior and/or exterior cooling ring onto the extruded film tube (3) belongs to the physical parameters that are changed sector by sector.

7. Film die (10) according to one of the preceding claims,
whereby at least the volume of the air, which is blown from at least one of the interior and/or exterior cooling ring onto the extruded film tube (3) belongs to the physical parameters that are changed sector by sector.

8. Film die (10) according to one of the claims 1 as well as 3 to 7,
whereby the sections (30) of the film die (10), in which the temperature can be changed individually, the sectors (31), in which the physical parameters of the air, which is blown from at least one of the interior and/or exterior cooling ring (1) onto the extruded film tube, can be changed, are arranged in the circumference direction of the extruded film tube in relation to each in such a way that resulting influencing ranges of the sections (30) and sectors (31) are created, which overlap a smaller angle in circumference direction of the film tube, than one of the sections or the sectors individually.

9. Film die (10) according to one of the preceding claims,
whereby both the exterior cooling ring (1) and the interior cooling ring are divided into sectors (31), within which the physical parameters of the air, which is blown from one of the interior- or exterior cooling ring (1) onto the extruded film tube (3), can b varied sector by sector, and that the sectors (31) of the one ring (1) are arranged in relation to the sectors of the other ring in the circumference direction of the extruded film tube (3) in such a way that the resulting influencing ranges (32) of the sectors of both rings overlap smaller angles in the circumference direction of the film tube, than the sectors (31) of both rings (1) individually.

10. Method for the production of tubular film (3) made of thermoplastic synthetics with a film die with at least one feed channel fro the synthetic fused material, which ends in a ring-shaped discharge nozzle and is divided into sectors (30) which includes at least one of an interior and/or an exterior cooling ring (1) that is adjusted to the diameter of the extruded synthetic tube (3), the extruded synthetic tube being divided into sectors in which physical parameters of the air blown onto the extruded film tube (3) can be variably changed sector by sector,
- whereby the film die is divided into sections (31), in which the temperature is individually variable,
- and at least one control unit (7, 8) controls the various measures for the influencing of the film thickness, and
- whereby the at least one control unit (7, 8) controls the wall thickness of the film bubble depending on the signal of a thickness measurement unit (9).

11. Method for the production of tubular film (3) made of thermoplastic synthetics with a film die with at least one feed channel fro the synthetic fused material, which ends in a ring-shaped discharge nozzle and is divided into sectors (30) which includes at least one of an interior and/or an exterior cooling ring (1) that is adjusted to the diameter of the extruded synthetic tube (3), the extruded synthetic tube being divided into sectors in which physical parameters of the air blown onto the extruded film tube (3) can be variably changed sector by sector,
- whereby in the film tube (10) additional bores are arranged across the circumference, which are essentially aligned vertical to the exterior cooling ring (1), whereby air is blown from them, the physical parameters of which are varied,
- and at least one control unit (7, 8) which (7, 8) controls the various measures for influencing the film thickness and
- the at least one control unit (7, 8) controls the wall thickness of the film bubble depending on the signal of a thickness measurement unit (9).

## Revendications

1. Tête de soufflage de feuilles (10) pour la fabrication de feuilles en gaine (3) à partir d'un matériau synthétique thermoplastique avec au moins un canal d'amenée (16) pour la fusion de matériau synthétique, qui débouche dans une buse de sortie annulaire et avec une bague de refroidissement intérieure et/ou extérieure (1) adaptée au diamètre de la gaine en matériau synthétique extrudée (3), qui est divisée en secteurs (31), dans lesquels les paramètres physiques de l'air soufflé sur la gaine en feuille extrudée (3) sont modifiables par secteurs,
- où la tête de soufflage de feuilles (10) est divisée en sections (30) dans lesquelles (30) la température est modifiable à chaque fois avec des cartouches chauffantes (5),
- où des thermoplongeurs (4) et/ou éléments de refroidissement des secteurs (31) peuvent être commandés par au moins une unité de commande (7, 8), et les cartouches chauffantes (5) des sections peuvent être commandées,
- où à l'aide de la au moins une unité de commande (7, 8), différentes mesures pour agir sur l'épaisseur de la feuille sont réglables ou peuvent être commandées,
- où avec la au moins une unité de commande (7, 8), l'épaisseur de paroi de la bulle en feuille peut être commandée en fonction du signal d'une installation de mesure d'épaisseur.

2. Tête de soufflage de feuilles (10) pour la fabrication de feuilles en gaine (3) à partir d'un matériau synthétique thermoplastique avec au moins un canal d'amenée (16) pour la fusion de matériau synthétique, qui débouche dans une buse de sortie annulaire, et avec une bague de refroidissement intérieure et/ou extérieure adaptée au diamètre de la gaine en matériau synthétique extrudée (3), qui est divisée en secteurs (31), dans lesquels des paramètres physiques de l'air soufflé sur la gaine en feuille extrudée (3) peuvent être modifiés par secteurs,
- où sont ménagés dans la tête de soufflage de feuilles (10) des perçages additionnels (6) au pourtour, qui (6) sont orientés sensiblement perpendiculairement à la bague de refroidissement extérieure (1), où à partir de ceux-ci (6), l'air peut être soufflé, dont les paramètres physiques peuvent être modifiés,
- où des thermoplongeurs (4) et/ou éléments de refroidissement des secteurs (31) peuvent être commandés par au moins une unité de commande (7, 8), et la température ou le flux volumique de l'air soufflé à travers les perçages additionnels peut être commandé,
- où à l'aide de la au moins une unité de commande (7, 8), différentes mesures pour agir sur l'épaisseur de la feuille peuvent être réglées ou commandées, et où
avec la au moins une unité de commande (7, 8), l'épaisseur de paroi de la bulle en feuille peut être commandée en fonction du signal d'une installation de mesure d'épaisseur.

3. Dispositif selon la revendication 1 et 2, où la tête de soufflage de feuilles (10) contient des cartouches chauffantes (5) et les perçages additionnels (6),
- et la température des sections (30) de la tête de soufflage (10) et les paramètres physiques de l'air, qui peut être soufflé à travers les perçages additionnels, sont modifiables.

4. Tête de soufflage de feuilles (10) selon l'une des revendications précédentes, où sont disposées dans la bague
de refroidissement externe (1) des cartouches chauffantes (5) et/ou des éléments de refroidissement sur le pourtour.

5. Tête de soufflage de feuilles (10) selon l'une des revendications 1 ainsi que 3 et 4, où pour le réglage de l'épaisseur de paroi de la bulle en feuille (3), tout d'abord les moyens (4) peuvent être commandés pour agir sur les paramètres physiques de l'air de la bague de refroidissement (1) et en complément les moyens (5) pour modifier la température des sections (30) de la tête de soufflage de feuilles (10).

6. Tête de soufflage de feuilles (10) selon l'une des revendications précédentes, où au moins la température de l'air, qui est soufflé par la bague de refroidissement intérieure et/ou extérieure (1) sur la gaine en feuille extrudée (3), fait partie des paramètres physiques qui peuvent être modifiés par secteurs.

7. Tête de soufflage de feuilles (10) selon l'une des revendications précédentes, où au moins le volume de l'air qui est soufflé par unité de temps de la bague de refroidissement intérieure et/ou extérieure (1) sur la gaine en feuille extrudée (3), fait partie des paramètres physiques qui peuvent être modifiés par secteur.

8. Tête de soufflage de feuilles (10) selon l'une des revendications 1 ainsi que 3 à 7, où les sections (30) de la tête de soufflage de feuilles (10), dans lesquelles la température peut être modifiée respectivement, les secteurs (31), dans lesquels les paramètres physiques de l'air, qui est soufflé par la bague de refroidissement intérieure et/ou extérieure (1) sur la gaine en feuille extrudée, est modifiable, sont disposées dans la direction périphérique de la gaine en feuille extrudée les unes relativement aux autres de façon que des zones d'action résultantes des sections (30) et secteurs (31) sont produites qui passent sur un plus petit angle dans la direction périphérique de la gaine en feuille que les sections ou secteurs.

9. Tête de soufflage de feuilles (10) selon l'une des revendications précédentes, où à la fois la bague de refroidissement extérieure (1) et aussi la bague de refroidissement intérieure est divisée en secteurs (31) à l'intérieur desquels les paramètres physiques de l'air, qui est soufflé par la bague de refroidissement intérieure ou extérieure (1) sur la gaine en feuille extrudée (3), peuvent être modifiés par secteurs, et en ce que les secteurs (31) d'une bague (1) sont disposés relativement aux secteurs de l'autre bague dans la direction périphérique de la gaine en feuille extrudée (3) de telle sorte les unes aux autres que les zones d'action résultantes (32) des secteurs des deux bagues passent sur de plus petits angles dans la direction périphérique de la gaine en feuille que les secteurs (31) des deux bagues (1) respectivement seuls.

10. Procédé de fabrication de feuilles en gaine (3) en matériau synthétique thermoplastique avec une tête de soufflage de feuilles (10) avec au moins un canal d'amenée pour la fusion de matériau synthétique, qui débouche dans une buse de sortie annulaire et avec une bague de refroidissement intérieure et/ou extérieure (1) adaptée au diamètre de la gaine en matériau synthétique extrudé (3), qui est divisée en secteurs (30), dans lesquels des paramètres physiques de l'air soufflé sur la gaine en feuille extrudée (3) sont modifiés par secteurs,
- où la tête de soufflage de feuilles est divisée en sections (31), dans lesquelles la température est respectivement modifiée,
- et au moins une unité de commande (7, 8) qui règle ou commande les différentes mesures pour agir sur l'épaisseur de feuille et
- où la au moins une unité de commande (7, 8) commande l'épaisseur de paroi de la bulle en
feuille en fonction du signal d'une installation de mesure d'épaisseur (9).

11. Procédé de fabrication de feuilles en gaine (3) en matériau synthétique thermoplastique avec une tête de soufflage de feuilles (10) avec au moins un canal d'amenée pour la fusion de matériau synthétique, qui débouche dans une buse de sortie annulaire, et avec une bague de refroidissement intérieure et/ou extérieure (1) adaptée au diamètre de la gaine en matériau synthétique extrudée (3), qui est divisée en secteurs (30), dans lesquels des paramètres physiques de l'air soufflé sur la gaine en feuille extrudée (3) sont modifiés par secteurs,
- où sont ménagés dans la tête de soufflage de feuilles (10) des perçages additionnels au pourtour, qui sont orientés sensiblement perpendiculairement à la bague de refroidissement extérieure (1), où de l'air est soufflé de ceux-ci, dont les paramètres physiques sont modifiés,
- et au moins une unité de commande (7, 8) règle ou commande les différentes mesures pour agir sur l'épaisseur de feuille et
- où la au moins une unité de commande (7, 8) commande l'épaisseur de paroi de la bulle en feuille en fonction du signal d'une installation de mesure d'épaisseur.
